# EUROPÄISCHE PATENTANMELDUNG

(11) **EP 2 662 279 A2**
(43) Veröffentlichungstag der Anmeldung: **13.11.2013**
(21) Anmeldenummer: 13001655.3
(22) Anmeldetag: 06.04.2013
(51) Int. Cl.: B63H 23/36, B63H 23/32

(54) **Wellenschonhülse**

(30) Priorität: 12.05.2012 DE 102012009478
(71) Anmelder: Blohm + Voss Industries GmbH, 20457 Hamburg (DE)
(72) Erfinder: Fangauf, Carlos, 20259 Hamburg (DE); Ziemen, Lars, 22335 Hamburg (DE)
(74) Vertreter: Hansmann, Dierk

(57) **Zusammenfassung**

Bei einer Abdichtung für rotierende Schiffswellen (1) als Stevenrohrabdichtung mit einer aufgebrachten Wellenbuchse und zugeordnete Dichtringe(7a bis 7c) ist vorgesehen, dass die Wellenbuchse (2a, 2b) durch zwei konzentrische Buchsen aus unterschiedlichen Materialien gebildet ist. Dabei wird ein Aussenteil (2a) der Wellenbuchse aus einem verschleissfesten Material sowie ein Innenteil (2b) der Wellenbuchse aus einem Material mit hoher Wärmeleitfähigkeit gebildet, wobei die Wandstärken von Aussenteil zu Innenteil im Verhältnis zwischen 1:10 und 1:3 bemessen sind.

## Beschreibung

Die Erfindung bezieht sich auf eine Abdichtung für rotierende Wellen von Schiffspropellern als Stevenrohrabdichtung mit einer Wellenbuchse, die über einen Flansch mit einem Propeller verbunden ist und die Wellenbuchse an einer Seite mit einem flüssigen relativ kalten Medium, wie Seewasser, und an der anderen Seite mit einem relativ warmen Medium, wie Schmieröl, in Verbindung steht und mehrere von einem ortsfesten Tragsystem gehaltene Dichtringe als Lippendichtungen und/oder Gleitringdichtungen der Wellenbuchse zugeordnet sind.

Anordnungen dieser Art sind in unterschiedlichen Ausbildungen bekannt. Es hat sich aber gezeigt, dass die aus Kunststoff aus dem Bereich von Elastomeren hergestellten Dichtringe durch die umgebenden Medien durch hohe Temperaturen negativ beeinflusst werden. Daraus folgen eine Störung der Geometrie im Dichtspalt und eine Leckage der Dichtung.

Die Abdichtung steht auf der einen Seite mit dem zumeist kühlen Seewasser in Kontakt und auf der anderen Seite mit dem wärmeren Schmierstoff im Stevenrohr, welches durch die Reibungswärme der Wälz- und Gleitlagerung erwärmt wird. Ein zusätzlicher signifikanter Wärmeeintrag entsteht lokal im Dichtspalt durch die Reibung der Dichtring auf der Wellenbuchse, der so entsprechend der geringen Wärmeleitfähigkeit der Elastomere zu einer starken Temperaturerhöhung an der Dichtlippenspitze führen kann. Die resultierende Temperatur wird maßgeblich durch die Wärmeleitfähigkeit der Wellenbuchse bestimmt, welche die Wärme an das Seewasser abgibt.

Die Wellenbuchse gewährleistet mehrere Funktionen, nämlich einen Korrosionsschutz der Welle gegenüber dem Seewasser, eine definierte Gegenlauffläche für die Dichtringe mit erprobtem tribologischem Verhalten sowie Wärmeleitung in Richtung des kühlen Seewassers. Diese Anforderungen sind alle gegenläufig.

Um die Lebensdauer der Dichtringe und die verbundenen Wartungsintervalle zu verlängern, wird deshalb die Reduktion der Temperatur der Dichtringe angestrebt. Hierzu ist bereits eine Anordnung gemäß DE 41 35 709 C vorgeschlagen worden. Nachteil dieser Ausbildung unter Verwendung von Heatpipes ist der hohe Aufwand für Konstruktion und Fertigung mit technisch anspruchsvollen Kühlelementen, deren geringe Querschnittsfläche in Richtung der Wärmesenke, die nicht gleichmäßige Verteilung des Kühlmittels zu verhindern.

Die Aufgabe der Erfindung ist es, eine kostengünstige gattungsgemäße Abdichtung zu schaffen, die auf einfache Weise eine Wärmeabführung gewährleistet und die Erfordernisse als Gegenlauffläche für die Dichtringe erfüllt.

Die Lösung dieser Aufgabe erfolgt erfindungsgemäß dadurch, dass die Wellenbuchse durch mindestens zwei konzentrisch angeordnete Buchsen aus unterschiedlichen Materialien gebildet ist und ein Aussenteil der Wellenbuchse aus einem verschleissfesten Material sowie ein Innenteil der Wellenbuchse aus einem Material mit hoher Leitfähigkeit besteht, wobei die Wandstärken von Aussenteil zu Innenteil im Verhältnis zwischen 1:10 und 1:3 bemessen sind.

Der Vorteil dieser Ausbildung ist eine signifikante Temperaturdeduktion der Dichtringe durch die hohe Wärmeletransportfähigkeit der Wellenbuchse bei gleichzeitig geringem konstruktivem Aufwand. Die Wärmeleitung erfolgt über die gesamte Länge der Wellenschonhülse vom Stevenrohr zur Wasserseite. Hierbei wird durch Ausnutzung der physikalischen Eigenschaft der Wärmeleitung eine Wartungsfreiheit und Verzicht auf flüchtige Kühlmittel erreicht.

Eine vorteilhafte Anordnung wird dadurch geschaffen, dass das Aussenteil durch rostfreien Stahl oder Duplex Stahl und das Innenteil durch Bronze oder Messing gebildet ist.

Zur Ausbildung einer guten Lauffläche ist vorgesehen, dass das Aussenteil eine zusätzliche Beschichtung aufweist. Hierbei ist vorgesehen, dass die Beschichtung als Hartmetall-Beschichtung bzw. als keramische Beschichtung ausgebildet ist.

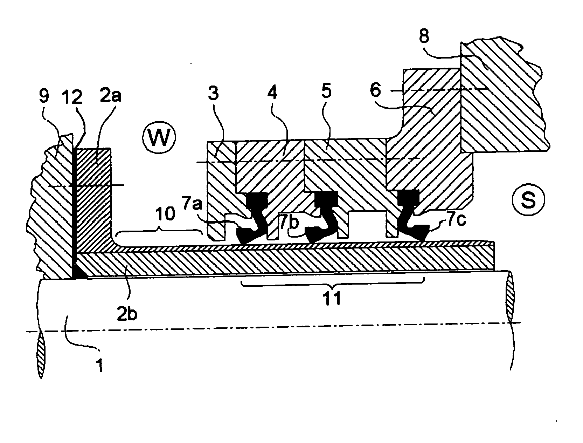

In der Zeichnung ist ein Ausführungsbeispiel mit einer zweiteiligen Wellenbuchse schematisch dargestellt.

Die dargestellte Anordnung besitzt eine Abdichtung einer rotierenden Schiffswelle 1 gegenüber zumeist kühlem Seewasser W auf einer Seite und einem wärmeren Schmierstoff S im Stevenrohr auf der anderen Seite, welches durch die Reibungswärme der Gleitlagerung erwärmt wird.

Auf der Welle 1 ist eine zweiteilige Wellenbuchse 2a, 2b montiert, die mit einer Propellernabe 9 unter Zwischenschaltung einer Flachpackung 12 über einen gebildeten Flansch der Wellenbuchse 2a, 2a verbunden ist.

Die eigentliche Abdichtung erfolgt über Dichtringe 7a bis 7c, die in einem stationären Gehäuse 3, 4, 5, 6 eingespannt und mit einer Stenvennuss 8 verbunden sind. Die Dichtringe 7a bis 7c gleiten dabei auf der Wellenbuchse 2a, 2b.

Durch diese Ausbildung entsteht im Bereich 11 im Dichtspalt durch eine Reibung der Dichtringe 7a bis 7c auf der zugeordneten Wellenbuchse 2a, 2b ein zusätzlich signifikanter Wärmeeintrag. Dabei wird die resultierende Wärme im Bereich 10 an das Seewasser W abgegeben.

Die Wellenbuchse 2a, 2b gewährleiste einen Korrosionsschutz der Schiffswelle 1 gegenüber dem Seewasser, eine definierte Gegenlauffläche für die Dichtringe 7a bis 7c mit tribologischem Verhalten sowie eine Wärmeleitung in Richtung des kühlen Seewassers. Diese Anforderungen sind gegenläufig und werden in diesem Fall durch die Wellenbuchse 2a, 2b in zweiteiliger Ausbildung aus unterschiedlichem Material berücksichtigt, wobei ein Aussenteil 2a aus einem verschleissfestem Material sowie ein Innenteil 2b aus einem Material mit hoher Leitfähigkeit besteht. Dabei ist vorgesehen, dass die Wandstärke vom Aussenteil 2a zum Innenteil im Verhältnis zwischen 1:10 und 1:3 bemessen ist.

Um den Erfordernissen Rechnung zu tragen, ist vorgesehen, dass das Aussenteil 2a durch rostfreien Stahl oder Duplex Stahl und das Innenteil 2b durch Bronze oder Messing gebildet ist.

Weiterhin ist vorgesehen, dass das Aussenteil 2a eine zusätzliche Beschichtung aufweist und die Beschichtung als Hartmetall-Beschichtung bzw. als keramische Beschichtung ausgebildet ist.

## Patentansprüche

1. Abdichtung für rotierende Wellen von Schiffspropellern als Stevenrohrabdichtung mit einer Wellenbuchse, die über einen Flansch mit einem Propeller verbunden ist und die Wellenbuchse an einer Seite mit einem flüssigen relativ kalten Medium, wie Seewasser, und an der anderen Seite mit einem relativ warmen Medium, wie Schmieröl, in Verbindung steht und mehrere von einem ortsfesten Tragsystem gehaltene Dichtringe als Lippendichtungen und/oder Gleitringdichtungen der Wellenbuchse zugeordnet sind, **dadurch gekennzeichnet, dass** die Wellenbuchse (2a, 2b) durch mindestens zwei konzentrisch angeordnete Buchsen aus unterschiedlichen Materialien gebildet ist und ein Aussenteil (2a) der wellenbuchse aus einem verschleissfesten Material sowie ein Innenteil (2b) der Wellenbuchse aus einem Material mit hoher Leitfähigkeit besteht, wobei die Wandstärken von Aussenteil (2a) zu Innenteil (2b) im Verhältnis zwischen 1:10 und 1:3 bemessen sind.

2. Abdichtung nach Anspruch 1, **dadurch gekennzeichnet, dass** das Aussenteil (2a) durch rostfreien Stahl oder Duplex Stahl und das Innenteil (2b) durch Bronze oder Messing gebildet ist.

3. Abdichtung nach Anspruch 1 oder 2, **dadurch gekennzeichnet, dass** das Aussenteil (2a) eine zusätzliche Beschichtung aufweist.

4. Abdichtung nach Anspruch 3, **dadurch gekennzeichnet, dass** die Beschichtung als Hartmetall-Beschichtung bzw. als keramische Beschichtung ausgebildet ist.
